# EUROPÄISCHE PATENTSCHRIFT

(11) **EP 0 472 950 B1**
(45) Veröffentlichungstag und Bekanntmachung des Hinweises auf die Patenterteilung: **26.04.1995**
(21) Anmeldenummer: 91113026.8
(22) Anmeldetag: 02.08.1991
(51) Int. Cl.: F16F 15/12, F16D 13/71

(54) **Elastische Kupplung**
Elastic coupling
Accouplement élastique

(30) Priorität: 25.08.1990 DE 4026996
(43) Veröffentlichungstag der Anmeldung: 04.03.1992
(73) Patentinhaber: J.M. Voith GmbH, D-89522 Heidenheim (DE)
(72) Erfinder: Kühne, Viktor, W-7085 Bopfingen (DE)
(74) Vertreter: Weitzel, Wolfgang, Dr.-Ing.

(56) Entgegenhaltungen:
- EP-A- 0 136 825
- DE-A- 3 841 639
- GB-A- 2 052 682
- US-A- 4 347 717

## Beschreibung

Die Erfindung betrifft eine elastische Kupplung in Scheibenbauweise, insbesondere geeignet für ein geteiltes Schwungrad für eine Brennkraftmaschine nach dem Oberbegriff des Anspruches 1. Eine Kupplung dieser Art ist aus der EP-A-0 136 825 bekannt.

Eine weitere Kupplung ist aus der DE-OS 38 41 639 bekannt, Sie weist ineinandergreifende Kupplungshälften auf, zwischen denen eine relativ lange und sich über einen großen Winkelbereich erstreckende, also gekrümmt eingebaute Schraubenfeder eingesetzt ist. Dazu weist die eine Kupplungshälfte eine kreisrunde und den Windungen der Feder angepaßte äußere Fläche zur radialen und axialen Führung auf. Eine derartige Federanordnung zeichnet sich dadurch aus, daß für bestimmte Betriebszustände günstige Federeigenschaften erzielt werden, nämlich wenn große Drehschwingungsamplituden mit geringer Federsteifigkeit aufgefangen und gedämpft werden sollen. Dabei aber wird die Feder aufgrund ihres gekrümmten Einbaues während der Verdrehung der beiden Kupplungshälften stark nach radial außen gedrückt. Dies führt trotz des in der Kupplung befindlichen Schmiermittels zu starker Reibungsdämpfung im äußeren Windungsbereich und zu einer unkontrollierbaren Beeinträchtigung der Federkennlinie. Darüber hinaus tritt Verschleiß auf an der Abstützfläche und an der Feder. Die gekrümmte Feder selbst ist an ihren radial inneren Windungen ungünstig belastet, und es ist fertigungstechnisch aufwendig, eine gekrümmte Feder mit hoher Präzision herzustellen.

Die Aufgabe der Erfindung besteht darin, eine Kupplung der eingangs geschilderten Art zu schaffen, bei der eine kostengünstig herstellbare Feder sowohl verschleißgeschützt als auch günstig belastet angeordnet ist, wobei die bekannten vorteilhaften Federeigenschaften beibehalten sind.

Diese Aufgabe wird durch die kennzeichnenden Merkmale des Anspruches 1 gelöst. Es ist eine Schraubenfeder vorgesehen, in deren radial äußere Windungen mindestens ein Keil eingesetzt ist, so daß die Feder selbst in mindestens zwei Teilbereiche unterteilt ist, wobei die Längsachse dieser Teilbereiche zueinander eine geknickte Ausrichtung erfahren. Diese Knickung entsteht durch Spreizung von zwei benachbarten Windungen der Feder, so daß insgesamt eine polygonartig gekrümmte Form der gesamten Feder entsteht, wobei

Der Vorteil dieser Anordnung besteht darin, daß die Feder selbst einteilig und mit im wesentlichen geradliniger Längsachse (im entspannten Zustand) hergestellt werden kann, wobei erst vor dem Einbau durch das Einsetzen der Keile eine Anpassung an die Krümmung des Ausschnittes in der Kupplung hergestellt wird. Bei der Stauchung der Feder unter Belastung bewegen sich die Keile mit den Windungen innerhalb des die Feder umhüllenden Gehäuses, wobei der oder die Keile am umgebenden Gehäuse nicht befestigt sind. Die Teilbereiche der Feder sind daher im wesentlichen gestreckte Teilstücke und unterliegen dadurch einer günstigen Belastung.
jeder Teilbereich der Feder schwächer gekrümmt ist als die gesamte Feder, bezogen auf ihre Gesamtlänge. Gemäß Anspruch 2 kann jeder Teilbereich der Feder kann auch geradlinig ausgebildet sein, d.h. mit Krümmungsradius unendlich. Gemäß Anspruch 3 kann der Keil als radiale Führung der Feder an der Knickstelle ausgebildet sein.

Ein Ausführungsbeispiel der Erfindung wird nachstehend anhand der Zeichnung näher beschrieben. Es zeigt:
- Figur 1: einen Längsschnitt durch eine elastische Kupplung;
- Figur 2: einen Querschnitt durch den Federbereich entlang der Schnittlinie II-II in Fig. 1.

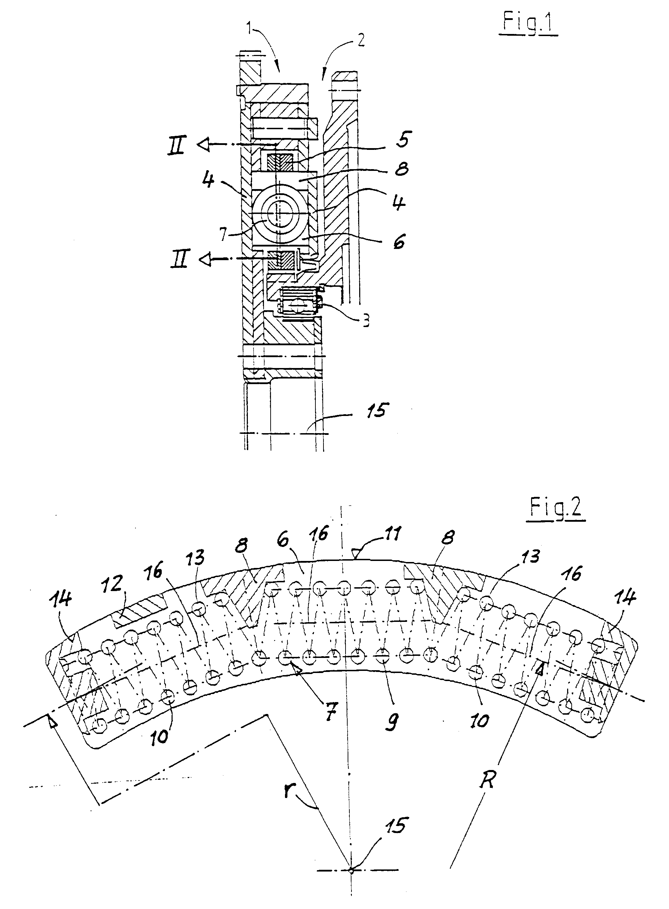

Die Fig. 1 Zeigt die Hälfte eines Längsschnittes durch eine elastische Kupplung mit einer ersten Kupplungshälfte 1 und einer Zweiten Kupplungshälfte 2, die die beiden Massen eines Zweimassenschwungrades in Scheibenbauweise darstellen. Die Kupplungshälfte 1 ist mit einer nicht dargestellten Brennkraftmaschine verbunden, die zweite Kupplungshälfte 2 dagegen über eine Reibungskupplung mit einem Getriebe eines Fahrzeugantriebes (nicht dargestellt). Die erste Kupplungshälfte 1 weist zwei Seitenscheiben 4 auf, in welche eine zur zweiten Kupplungshälfte gehörende Mittelscheibe 5 eintaucht, welche ihrerseits im Nabenbereich über ein Wälzlager 3 auf der ersten Kupplungshälfte drehbar gelagert ist. Zwischen der Mittelscheibe 5 und den Seitenscheiben 4 ist ein als Schraubenfeder 7 ausgebildetes elastisches Kupplungselement angeordnet. Dazu weist sowohl die Mittelscheibe 5 als auch die Seitenscheiben 4 entsprechende Ausschnitte 6 auf, in welche die Schraubenfeder 7 in Umfangsrichtung eingelegt ist.

Die Fig. 2 zeigt einen schematischen Querschnitt durch den Federbereich entlang der Schnittlinie II-II in Fig. 1. Zu erkennen ist der Ausschnitt 6 in der Mittelscheibe 5 sowie die Schraubenfeder 7. Im äußeren Windungsbereich 13 der Schraubenfeder 7 befinden sich zwei Keilfedertöpfe 8. Diese unterteilen die Feder 7 in insgesamt drei Teilbereiche 9, 10, die durch die radial äußere Spreizung zwischen zwei benachbarten Windungen zueinander eine geknickte Lage einnehmen. An den beiden Stirnseiten der Schraubenfeder 7 befinden sich Federteller 14 zur Abstützung im Ausschnitt 6.

Die Keilfedertöpfe 8 sind so zwischen den äußeren Windungen 13 der Schraubenfeder 7 und der äußeren Begrenzung 11 des Ausschnittes 6 angeordnet, daß eine Abstützung der Feder entsteht, ohne daß die Feder selbst in metallische Berührung zu den Teilen der Kupplung gerät. Die Keilfedertöpfe 8 können sich, da sie mit der Mittelscheibe, d.h. den Ausschnitten 6, nicht verbunden sind, mit der Schraubenfeder 7 mitbewegen. Sie halten dabei während der Stauchung der Schraubenfeder 7 die zueinander geknickte Lage der Längsachsen 16 der einzelnen Teilbereiche 9, 10 der Schraubenfeder 7 aufrecht. Dadurch wird erreicht, daß der Krümmungsradius R jedes Teilbereichs 9, 10 sehr groß bleibt bzw. jeder Teilbereich sogar die gestreckte Lage (Krümmungsradius R unendlich) beibehält. Dabei hat die gesamte Federanordnung zwischen den beiden Federtellern 14 einen viel kleineren Krümmungsradius, dessen Mittelpunkt in der Regel mit der Drehachse 15 der Kupplung zusammenfällt. Dadurch gelingt es, eine insgesamt gekrümmte Schraubenfeder 7 zu schaffen, die sich aber aus günstig beanspruchten gestreckten Teilbereichen 9, 10 zusammensetzt.

In jedem Teilbereich 9, 10 der Schraubenfeder 7 kann zwischen dem äußeren Windungsbereich 13 und der inneren Begrenzung 11 des Ausschnittes 6 ein lose eingelegtes Führungsstück vorgesehen sein, welches ein Ausknicken nach radial außen zusätzlich verhindert.

Der Keilfedertopf wird vorzugsweise aus einem Material hergestellt, das leicht, gegen Abrieb, hohe Temperatur und gegen das in der Regel in der Kupplung befindliche Schmiermittel widerstandsfähig ist unter Beibehaltung guter Gleiteigenschaften. Des weiteren kann der Keilfedertopf so gestaltet sein, daß er von außen her bis zum radial inneren Windungsbereich der Schraubenfeder reicht.

## Patentansprüche

1. Elastische Kupplung in Scheibenbauweise
1.1 mit zwei Kupplungshälften (1, 2), z. B. den zwei Massen eines geteilten Schwungrades für eine Brennkraftmaschine
1.2 die Kupplungshälften sind gegen die Kraft von Schraubenfedern (7) begrenzt gegeneinander verdrehbar
1.3 es sind mehrere am Umfang verteilte Ausschnitte (6) zur Aufnahme der Schraubenfedern (7) vorgesehen
1.4 es ist eine Mehrzahl von Keilen (8) vorgesehen die mit ihren radial nach innen sich verjüngenden Teilen jeweils zwischen zwei benachbarten Federwindungen, in deren radial äußeren Windungsbereich eingesetzt, greifen
1.5 ein Ausschnitt (6) nimmt eine einzige Schraubenfeder (7) auf
1.6 der einzelne Keil (8) greift zwischen zwei einander benachbarte Windungen der Schraubenfeder (7) ein, die dadurch in Teilbereiche (9, 10) aufgeteilt ist
gekennzeichnet durch das folgende Merkmal:
1.7 jeder Teilbereich (9, 10) der Schraubenfeder (7) ist schwächer gekrümmt als die gesamte Schraubenfeder (7), bezogen auf ihre Gesamtlänge.

2. Kupplung nach Anspruch 1, dadurch gekennzeichnet, daß die Teilbereiche (9, 10) eine geradlinige Längsachse (16) aufweisen.

3. Kupplung nach einem der Ansprüche 1 oder 2, dadurch gekennzeichnet, daß der einzelne Keil (8) die radial äußere Abstützung des äußeren Windungsbereiches (13) der Schraubenfeder (7) an der äußeren Begrenzung (11) des Ausschnittes (6) bildet.

## Claims

1. A flexible coupling of disc-type construction
1.1 with two coupling halves (1, 2), e.g. the two masses of a divided flywheel for an internal combustion engine
1.2 the coupling halves are adapted for limited rotation in respect of each other against the force of coil springs (7)
1.3 a plurality of peripherally distributed cut-outs (6) are provided to accommodate the coil springs (7)
1.4 a plurality of wedges (8) are provided of which the radially inwardly tapering parts engage in each case between two adjacent spring turns, inserted into the radially outer portion of the turn,
1.5 portion (6) accommodates a single coil spring (7)
1.6 the single wedge (8) engages between two adjacently disposed turns of the coil spring (7) which is thereby divided into partial portions (9, 10)
characterised by the following feature:
1.7 each partial portion (9, 10) of the coil spring (7) is more weakly curved than the entire coil spring (7), in terms of its total length.

2. A coupling according to Claim 1, characterised in that the partial portions (9, 10) have a rectilinear longitudinal axis (16).

3. A coupling according to one of Claims 1 or 2, characterised in that the single wedge (8) constitutes the radially outer support of the outer portion (13) of the turn of the coil spring (7) on the outer boundary (11) of the cut-out (6).

## Revendications

1. Accouplement élastique de type disque,
1.1 comprenant deux moitiés d'accouplement (1, 2) par exemple un volant d'inertie divisé en deux masses pour un moteur à combustion interne,
1.2 les moitiés de l'accouplement peuvent tourner l'une par rapport à l'autre de manière limitée contre la force développée par des ressorts hélicoïdaux (7),
1.3 il y a plusieurs découpes (6) réparties à la périphérie pour recevoir les ressorts hélicoïdaux (7),
1.4 plusieurs éléments en forme de coins (8) sont prévus dont les parties respectives diminuant radialement de l'intérieur vers l'extérieur viennent prendre entre deux spires de ressorts, voisines, en se logeant radialement dans la zone des spires extérieure,
1.5 une découpe reçoit un seul ressort hélicoïdal (7),
1.6 un seul coin (8) vient prendre entre deux spires voisines du ressort hélicoïdal (7) pour le diviser en des parties (9, 10),
caractérisé par les caractéristiques suivantes :
1.7 chaque partie (9, 10) du ressort hélicoïdal (7) est cintrée de manière moins prononcée que l'ensemble du ressort hélicoïdal (7) rapporté à sa longueur totale.

2. Accouplement selon la revendication 1, caractérisé en ce que les zones partielles (9, 10) présentent un axe longitudinal (16), droit.

3. Accouplement selon l'une des revendications 1 ou 2, caractérisé en ce que chaque élément en forme de coin (8) forme radialement l'appui extérieur de la zone de spires extérieure (13) du ressort hélicoïdal (7) au niveau de la limite extérieure (11) de la découpe (6).
